# EUROPEAN PATENT SPECIFICATION

(11) **EP 1 480 466 B1**
(45) Date of publication and mention of the grant of the patent: **06.11.2013**
(21) Application number: 04251749.0
(22) Date of filing: 25.03.2004
(51) Int. Cl.: H04N 9/31, G02B 26/10

(54) **Scrolling unit and projection unit**
Verschiebungseinheit und Projektionseinheit
Unité de défilement et unité de projection

(30) Priority: 24.05.2003 KR 2003033242; 26.03.2003 US 457312 P
(43) Date of publication of application: 24.11.2004
(73) Proprietor: Samsung Electronics Co., Ltd., Suwon-si, Gyeonggi-do, 443-742 (KR)
(72) Inventor: Cho, Kun-ho, Suwon-si Gyeonggi-do (KR); Kim, Dae-sik, Yeongtong-gu Suwon-si Gyeonggi-do (KR); Kwon, Sang-chul, Gyeonggi-do (KR)
(74) Representative: Walaski, Jan Filip

(56) References cited:
- US-A- 5 781 251
- US-A1- 2002 005 914
- US-A1- 2002 093 499
- US-A1- 2002 118 311
- US-B1- 6 288 815

## Description

The present invention relates to a scrolling unit and to a video projection apparatus including a light source, colour separation means for splitting a beam from the light source according to colour, a light modulator for modulating light from the colour separation means and a scrolling unit for scanning the beams from the colour separation means sequentially and concurrently across the light modulator.

There are two main types of projection television. 3-panel and single-panel. 3-panel systems use three light valves for modulating red , green and blue beams respectively. Single-panel system use one panel to modulate red, green and blue beams cyclically.

Single-panel projection systems provide an optical efficiency of only 1/3 of that of three-panel projection systems because the red, green and blue image components are formed sequentially rather than concurrently.

In a known single-panel projection system, white light is separated into red, green and blue beams using colour filters and the three monochromatic beams are sequentially transmitted to a light valve. The light valve modulates each beam independently. As described above, a single-panel projection system uses different coloured beams sequentially. Therefore, the light efficiency is reduced to 1 /3 of the light efficiency of a three-panel projection system.

A modified single-panel system involves colour scrolling. Colour scrolling involves white light being separated into red, green and blue beams and the three coloured beams being scanned across panel in sequences such that, at any time, different locations on a panel are illuminated with different coloured light.

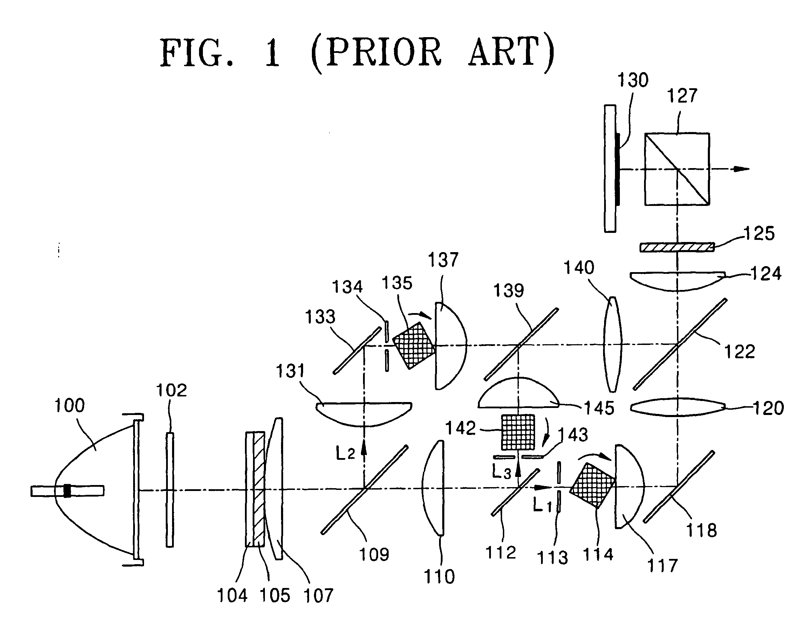

In a single-panel scrolling projection system, as shown in Figure 1, white light emitted from a light source 100 passes through first and second lens arrays 102, 104 and a polarization conversion system (PCS) 105 and is separated into red, green and blue beams by first through fourth dichroic filters 109, 112, 139, 122. To be more specific, the red beam R and the green beam G are transmitted by the first dichroic filter 109 and advance along a first light path L₁, while the blue beam B is reflected by the first dichroic filter 109 and travels along a second light path L₂. The red beam R and the green beam G on the first light path L₁ are separated by the second dichroic filter 112. The second dichroic filter 112 transmits the red beam R along the first light path L₁ and reflects the green beam G along a third light path L₃.

First through third prisms 114, 135 and 142 are disposed on the first through third light paths L₁, L₂, and L₃, respectively. The light emitted from the light source 100 is separated into the red, green and blue beams, and they are then scrolled while passing through corresponding first through third prisms 114, 135, 142. The first through third prisms 114, 135, 142 rotate at a uniform speed such that red, green and blue coloured bars are scanned across the light valve 130. The green and blue beams that travel along the second and third light paths L₂ and L₃ respectively are transmitted and reflected respectively by the third dichroic filter 139 and then combined. Finally, the red, green and blue beams are combined by the fourth dichroic filter 122. The combined beam is transmitted to a light valve 130 via a polarization beam splitter (PBS) 127. The light valve 130 modulates the beams spatially and temporally to a picture.

A condensing lens 107 is disposed next to the PCS 105 and light path correction lenses 110, 117, 131, 137, 145 are disposed along the first through third light paths L₁, L₂, L₃. Condensing lenses 120, 140 are disposed between the first and fourth dichroic filters 112, 122 and between the third and fourth dichroic filters 139, 122 respectively. A focusing lens 124 and a polarizer 125 are disposed on the light path between the fourth dichroic filter 122 and the PBS 127. Light path changers, for example, mirrors 118, 133, are disposed in the first and third light paths L₁, L₃ respectively.

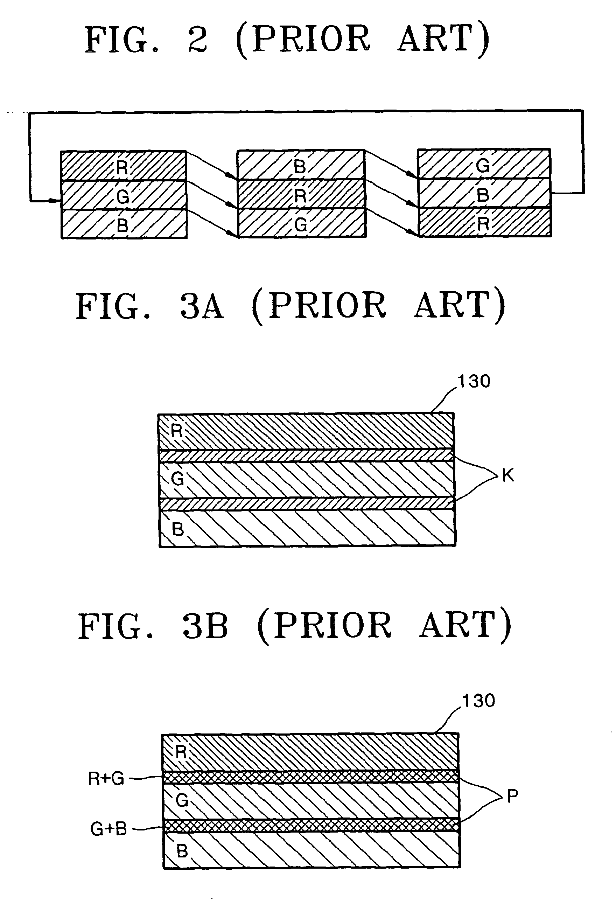

The cyclical scrolling of the red, green and blue colour bars due to rotation of the first through third prisms 114, 135, 142 is illustrated in Figure 2. Scrolling represents the movement of the colour bars, formed on the surface of the light valve 130, when the first, second and third prisms 114, 135, 142 are rotated synchronously. As described above, one frame of a colour image is formed by one complete scrolling cycle during which the red, green and blue bars have swept across the whole of the light valve.

A colour image obtained by turning on or off the individual pixels of the light valve 130 according to an image signal is magnified by a projection lens (not shown). Then, the magnified image is made incident on a screen.

First, second and third slits 113, 134, 143 are disposed in front of the first, second, and third prisms 114, 135, 142 respectively and control the divergence angle of incident light. The heights of the colour bars are set by heights of respectively the first, second and third slits 113, 134, 143. If the slit heights are too small, the red, green and blue bars do not meet along their sides and black bars K are formed between adjacent colour bars as illustrated in Figure 3A. On the other hand, if the slit heights are too large, the red, green and blue colour bars overlap forming overlapping portions P, as illustrated in Figure 3B.

Since the conventional projection system uses different light paths for each colour as described above, different light path correction lenses must be included for each colour, components for reuniting the separated light beams must be further included and separate components must be included for each colour. Hence, the optical system becomes bulky, and the manufacture and assembly thereof is complicated, thus degrading the yield. In addition, three motors (not shown) for rotating the first, second and third prisms 114, 135, 142 generate a lot of noise during operation. Still further, a projection system utilizing three motors is manufactured at a greater cost than a colour wheel type projection system which utilizes a single motor.

In order to produce a colour picture using a scrolling technique, colour bars as shown in Figure 2 must be moved at a constant speed. Since the conventional projection system must synchronize the light valve 130 with the three prisms 114, 135, 142 in order to achieve scrolling, controlling the synchronization is not easy. Further, because the first, second and third prisms 114, 135, 142 make circular motions individually, the colour scrolling speed is irregular, harming the quality of the resultant image.

US 2002/0118311 discloses a scrolling device having spiral reflection surfaces formed on the outer surface of a cylindrical body.

US 2002/0093499 discloses a sequential colour filter in which the colour filters are arranged helically around a cylinder.

US 5,781,521 discloses a rotating deflecting lens comprising a transparent optical medium having a spiral cross-section.

US 6, 288,815 discloses a scrolling device comprising a single cylinder lens wound in a helix about a drum.

The present invention provides an apparatus comprising a scrolling unit for scrolling an incident light beam having a rectangular cross-section with an original width, wherein said scrolling unit has an input side, an output side and at least one helical cylindrical lens which is helically arranged on an outer circumferential surface of a cylinder; wherein an area through which the incident light beam enters the input side of the scrolling unit defines an apparent cylinder lens array: wherein the rotation of the scrolling unit about the axis of the cylinder simulates a rectilinear motion of the apparent cylinder lens array; a first cylindrical lens disposed on the input side of the scrolling unit; and a second cylindrical lens disposed on the output side of the scrolling unit; characterised in that said first cylindrical lens is adapted to reduce the width of said incident light beam in a direction perpendicular to the axis of the cylinder; and said second cylindrical lens is adapted to expand the width of a light beam exiting through said output side of the scrolling unit.

Additional preferred and optional features are set forth in claims 2 to 19 appended hereto.

Embodiments of the present invention will now be described, by way of example, with reference to Figures 4 to 15 of the accompanying drawings, in which:
Figure 1 is a schematic diagram of a conventional projection system;
Figure 2 is an illustration of the scanning by red, green and blue bars in a conventional projection system;
Figures 3A and 3B show the effect of colour bars being too thin or too thick respectively;
Figure 4 is a perspective view of a scrolling unit according to the present invention;
Figures 5A and 5B illustrate the operation of the scrolling unit of Figure 4;
Figure 6A is a top view of the scrolling unit of Figure 4;
Figure 6B is a cross-section of the scrolling unit taken along line IV-IV in Figure 6A;
Figure 7 is a top view of another scrolling unit according to the present invention;
Figure 8A is a schematic diagram of a projection system according to the present invention;
Figure 8B is a top view of a part of the projection system of Figure 8A;
Figure 9A illustrates a beam illuminating the scrolling unit of Figure 4 when no cylindrical lenses are used in the projection system of Figure 8A;
Figure 9B shows effect of a first cylindrical lens on the shape of the beam illuminating the scrolling unit of Figure 4;
Figure 10A through 10C illustrate the scrolling operation of the projection system of Figure 8A;
Figure 11 is a schematic diagram of a second projection system according to the present invention;
Figure 12A is a schematic diagram of a third projection system according to the present invention;
Figure 12B is a top view of a part of the projection system of Figure 12A;
Figure 13 is a schematic diagram of a fourth projection system according to the present invention;
Figure 14A is a perspective view schematically a fifth projection system according to the present invention;
Figure 14B is a top view of a part of the projection system of Figure 14A; and
Figure 15 is a schematic diagram of a sixth projection system according to the present invention.

### Scrolling Unit

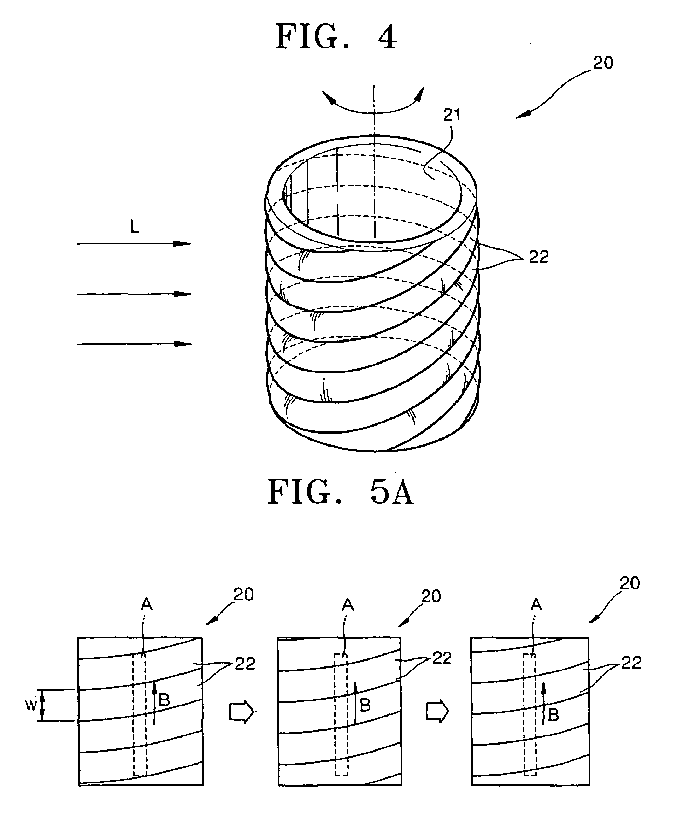

Referring to Figure 4, a scrolling unit 20 according to an embodiment of the present invention comprises a hollow cylinder whose outer surface comprises a plurality of helical cylindrical lenses 22. The inner surface 21 of the cylinder is plain with a circular cross-section. However, the inner surface 21 may be defined by various polyprism shapes. The scrolling unit 20 rotates in use.

Referring to Figure 5A, the rotation of the scrolling unit 20 simulates a rectilinear motion, in direction indicated by arrow B, of the cylinder lenses 22 as viewed through an area A through which light L passes.

Although the scrolling unit 20 is formed by helically arranging the cylinder lenses 22, the area A, which has a relatively narrow width, appears as an array of horizontal cylinder lenses 22, that is a vertical cylinder lens array. As the scrolling unit 20 rotates, the positions of the lenses 22 through which light passes change. The apparent cylinder lens array moves linearly "up" scrolling unit 20. The rate of apparent movement of the cylinder lens array is set by the pitch of the lens helices and the rotational speed of the scrolling unit 20.

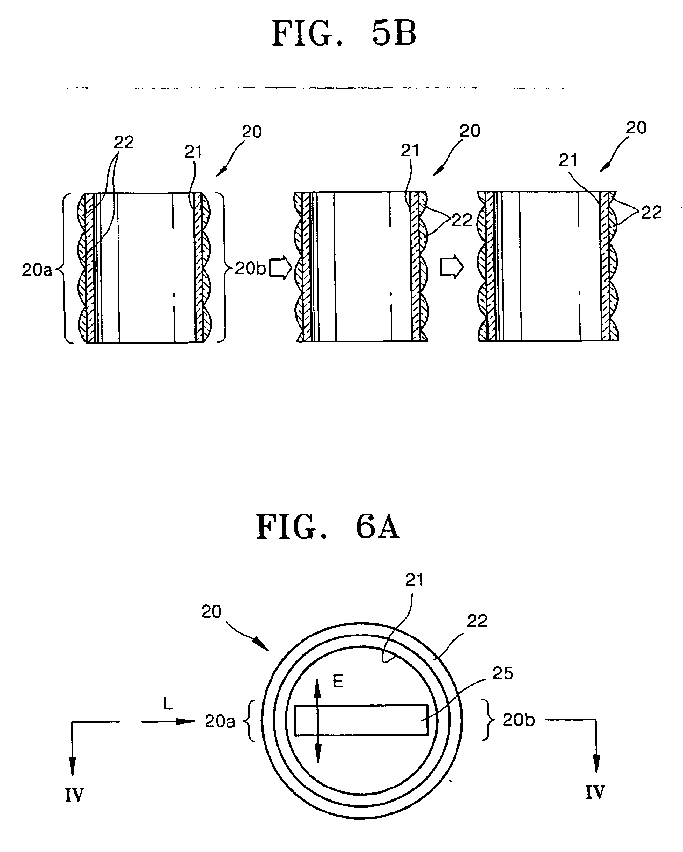

Referring to Figure 5B, the scrolling unit 20 produces an effect where light passes through two lens arrays. Light entering through a first side 20a of the scrolling unit 20 is divided into a plurality of beams by the lenses 22. This forms a plurality of beams at the opposite side 20b of the scrolling unit 20. These beams are scrolled by the rectilinear motion of the cylinder lens array effected by rotation of the scrolling unit 20.

As the scrolling unit 20 rotates, the cylinder lens array, defined by the area A and through which light passes, moves upward or downward (depending on the configuration of the lens helices and the direction of rotation of the scrolling unit 20). As the cylinder lens array moves, the paths of the beams passing through the cylinder lens array are changed. This motion of the cylinder lens array is made at intervals of a width (w) of each of the lens cells 22. As long as the scrolling unit 20 continues to rotate in the same direction, the cylinder lens array continues to move in the same direction.

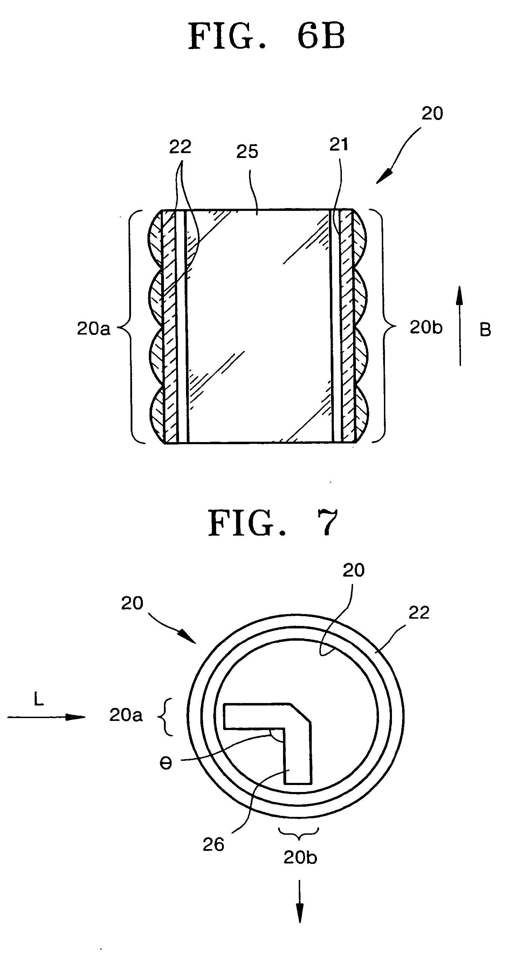

A light guide plate 25 is installed between the first and second surfaces 20a and 20b of the scrolling unit 20 in the present embodiment as shown in Figures 6A and 6B, but may be omitted in other embodiments. The light guide plate 25 guides light passing through the first surface 20a so that the light is uniformly distributed in direction E. The light guide plate 25 guides the light L in the direction perpendicular to the direction E.

Alternatively, a light path changer 26 may be disposed within the scrolling unit 20 as shown in Figure 7. The light path changer 26 may be a light guide plate bent at a predetermined angle (θ). Alternatively, the light path changer 26 may be a mirror which is inclined at a predetermined angle with respect to the incident light axis. Since the light path changer 26 is bent at the predetermined angle (θ), the incoming light can be directed sideways out of the scrolling unit 20.

The functional effects of the light guide plate 25 and the light path changer 26 are described below.

### Projection System

### First Embodiment

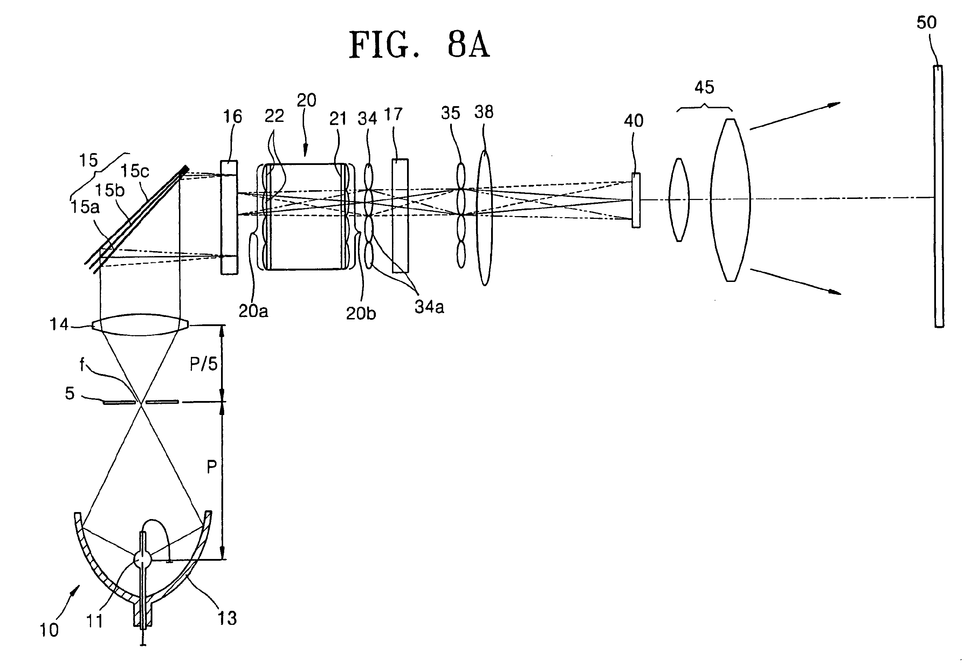

Referring to Figure 8A, a first projection system according to the present invention includes a light source 10, a colour separator 15, a scrolling unit 20, a light valve 40 and a projection lens unit 45. The colour separator 15 separates light emitted from the light source 10 according to colour. The scrolling unit 20 scrolls a plurality of colour beams. The light valve 40 processes the scrolling beams according to an image signal to form a picture. The projection lens unit 45 magnifies the picture formed by the light valve 40 and projects the magnified picture onto a screen 50.

The light source 10 emits white light and includes a lamp 11 and a mirror 13 for directing the light, emitted by the lamp 11, in the desired direction. The mirror 13 is elliptical and has one focal point at the position of the lamp 11 and another at a point where the light from the lamp is focused. Alternatively, the mirror 13 may be parabolic and collimate the light from the lamp 11. If a parabolic mirror is used, a lens for focusing light must also be included.

A collimating lens 14 for collimating incident light is installed in the light path between the light source 10 and the colour separator 15. In Figure 8A, P denotes the distance between the light source 10 and the focal point (f) where the light from the light source 10 is focused. The collimating lens 14 may be installed at a distance P/5 from the focal point (f). By installing a projection system in this way, the structure of an optical system can be made more compact.

A spatial filter 5 for controlling the etendue of the optical system is installed between the light source 10 and the collimating lens 14. Etendue denotes an optical conservation quantity in an optical system. The spatial filter 5 is preferably, but not necessarily, installed at the focal point (f) of the reflection mirror 13. The spatial filter 5 has a slit whose width is controllable. The sizes of colour bars formed on the light valve 40 depend on the width of the slit.

The colour separator 15 separates the light emitted from the light source 10 into three coloured beams, namely red, green and blue beams. The colour separator 15 is constructed with first, second and third dichroic filters 15a, 15b, 15c disposed aslant at different angles with respect to an incident light axis. The colour separator 15 separates incident light according to colour and directs the separated light beams at different angles. For example, the first dichroic filter 15a reflects the red component of the incident white light and, at the same time, transmits the green and blue components. The second dichroic filter 15b reflects the green component of the light transmitted by the first dichroic filter 15a and, at the same time, transmits the blue component. The third dichroic filter 15c reflects the blue light transmitted by the first and second dichroic filters 15a, 15b. The third dichroic filter 15c may be replaced by a simple mirror.

The red, green and blue beams, into which incident light has been separated by the first, second, and third dichroic filters 15a, 15b, 15c, are reflected at different angles. The red, green and blue beams are focused on the same location and directed at the scrolling unit 20, which is as described above.

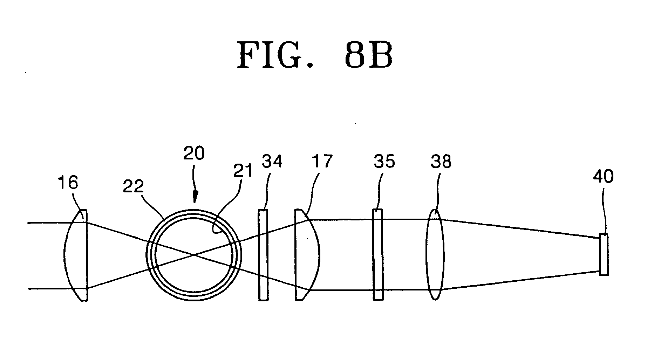

A first cylindrical lens 16 is disposed between the colour separator 15 and the scrolling unit 20. A first fly-eye lens array 34, a second cylindrical lens 17, and a second fly-eye lens array 35 are disposed in series in the light path between the scrolling unit 20 and the light valve 40. Although the second cylindrical lens 17 is disposed between the first and second fly-eye lens arrays 34, 35 in Figures 8A and 8B, it may be disposed in front of the first fly-eye lens array 34 in other embodiments.

A relay lens 38 is installed in the light- path between the second fly-eye lens array 35 and the light valve 40.

The first cylindrical lens 16 reduces the widths of the light beams, incident on the scrolling unit 20, and the second cylindrical lens 17 expands beams to their original widths.

The operation of the projection system of Figure 8A having the above-described configuration will now be described.

White light emitted from the light source 10 is incident upon the colour separator 15 via the spatial filter 5 and the collimating lens 14. The white light incident upon the colour separator 15 is separated into three coloured beams, i.e. red, green and blue coloured beams, by the first, second and third dichroic filters 15a, 15b, 15c, and the red, green and blue colour beams are incident upon the scrolling unit 20. The widths of the coloured beams transmitted by the first, second, and third dichroic filters 15a, 15b, 15c are reduced by the first cylindrical lens 16, as shown in Figure 8B, before they are incident on the scrolling unit 20.

The light passing through the first cylindrical lens 16 is focused at the centre of the scrolling unit 20. Hence, the beams leaving the output side 20b have the same width as the beams incident on the input side 20a of the scrolling unit 20.

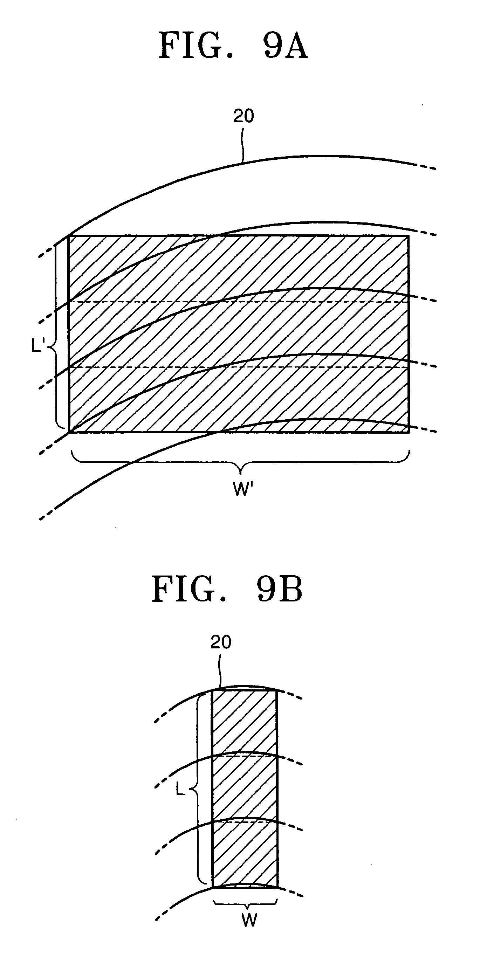

Figure 9A shows the cross-section of a composite beam L' emitted from the light source 10 and made incident on the scrolling unit 20 without passing through the first cylindrical lens 16. Beam L' has a width W'. Figure 9B shows the cross-section of a composite beam L that has a width W, reduced by the first cylindrical lens 16, and which is then incident on the scrolling unit 20. In the case of the beam L', that is, when a beam passing through the scrolling unit 20 is relatively wide, the shape of the helical lens array does not match with the shape of the beam L', and thus there is light loss over an unmatched area for each colour. Each component of the composite beam L' extends significantly over a plurality of helical lenses. To minimize the light loss, the first cylindrical lens 16 is provided to produce the beam L with a reduced width, as shown in Figure 9B. The shape of the helical lens array, as shown in Figure 9B, aligns more closely with that of the beam L.

Referring back to Figure 8A, the light passing through the scrolling unit 20 is collimated by the second cylindrical lens 17 so that the light previously reduced in width by the first cylindrical lens 16 is returned to its original width.

The red, green and blue beams produced by the colour separator 15 and travelling at different angles with respect to the incident light axis are divided into a plurality of beams by the lenses 22 while passing through the input side 20a of the scrolling unit 20. The separated red, green and blue beams are directed to the output side 20b, which is opposite to the input side 20a.

The red, green and blue beams transmitted through the scrolling unit 20 are incident on the first fly-eye lens array 34 such that they are arrayed on each of lens cells 34a. Red, green and blue beams transmitted through the first fly-eye lens array 34 are collimated by the second cylindrical lens 17. Thereafter, the collimated red, green and blue beams are focused on respective areas of the light valve 40 via the second fly-eye lens array 35 and the relay lens 38, thereby forming colour bars.

Since the scrolling unit 20 is in the shape of a drum, light passes through the first and second surfaces 20a and 20b of the scrolling unit 20. Hence, an effect where light passes through two lens arrays can be obtained. As the scrolling unit 20 rotates, the lens arrays defined by the areas of the scrolling unit 20 through which light passes move linearly. Hence, the colour bars formed on the light valve 40 are scrolled.

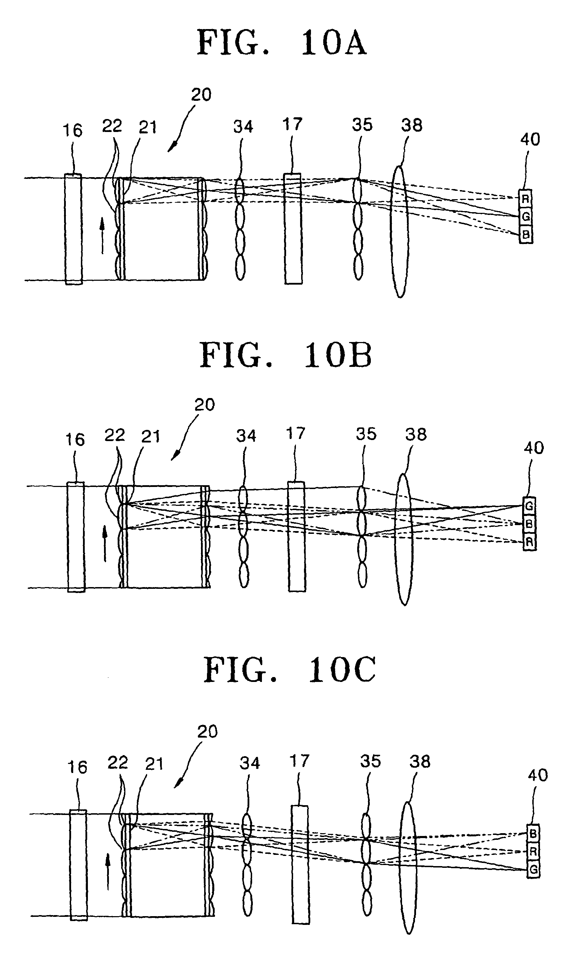

The scrolling of colour bars by the scrolling unit 20 will now be described with reference to Figures 10A through 10C.

Referring to Figure 10A, the red, green and blue beams obtained by the colour separator 15 are incident upon the lenses 22 on the input side 20a of the scrolling unit 20 and then propagate to the output side 20b thereof. Thereafter, the red, green and blue beams are focused on respective areas of the light valve 40 via the first and second fly-eye lens arrays 34, 35 and the relay lens 38. Hence, red, green and blue colour bars are formed on the light valve 40. The second cylindrical lens 17 returns the width of light previously reduced by the first cylindrical lens 16 to the original width.

Light passes through the scrolling unit 20, the first and second fly-eye lens arrays 34, 35 and the relay lens 38 and forms colour bars on the light valve 40, for example, in the order red, green, blue. As the scrolling unit 20 rotates, the vertical lens arrays, defined by the area of the scrolling unit 20 through which light passes, moves upwards in this example. Accordingly, the focal points of the colour beams passing through the scrolling unit 20 vary as the scrolling unit 20 moves, and colour bars in the order green, blue, red are formed, as shown in Figure 10B are formed. Then, as the scrolling unit 20 rotates further, colour bars are formed in the order blue, red, green, as shown in Figure 10C. This scrolling is periodically repeated as the scrolling unit 20 rotates.

### Second Embodiment

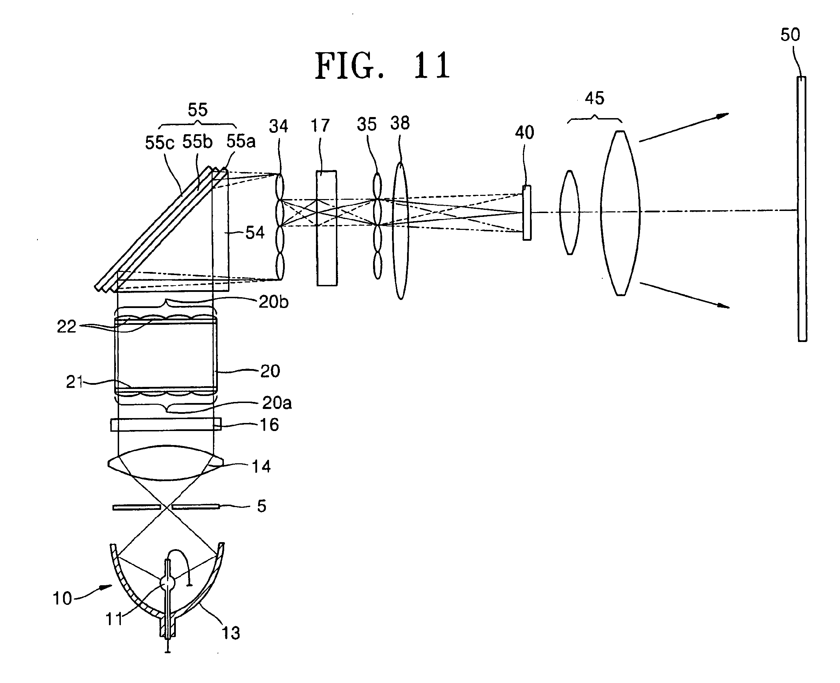

Referring to Figure 11, a second projection system comprises a colour separator 55, which includes first, second and third dichroic filters 55a, 55b, 55c for transmitting or reflecting incident light according to colour. The first, second and third dichroic filters 55a, 55b, 55c are disposed parallel to one another.

The second projection system includes a light source 10, a spatial filter 5, a scrolling unit 20 and the colour separator 55, which are arranged in series. The spatial filter 5 is disposed at the focal plane of light emitted from the light source 10 and controls the divergence angle (or etendue) of incident light. The scrolling unit 20 divides light, transmitted through the spatial filter 5, into a plurality of different coloured beams and scrolls the beams so that they are focused on different parts of the light valve 40. The colour separator 55 is disposed between the scrolling unit 20 and the light valve 40.

The first cylindrical lens 16, for reducing the width of the light beam incident upon the scrolling unit 20, is installed in front of the scrolling unit 20. The first fly-eye lens array 34, the second cylindrical lens 17, the second fly-eye lens array 35 and the relay lens 38 are sequentially disposed on a light path between the colour separator 55 and the light valve 40. The positions of the first fly-eye lens array 34 and second cylindrical lens 17 may be switched.

The light beam incident on the scrolling unit 20 passes at different angles through different areas of a cylindrical lenses 22. The light beams are incident upon the colour separator 55 and separated into beams of different colours by the first, second and third dichroic filters 55a, 55b, and 55c. Finally, the separated light beams are directed at different angles. Also, in contrast with the projection system of Figure 8A, a prism 54 is additionally included between the scrolling unit 20 and the colour separator 55 so as to transfer an incident light to the colour separator 55 without changing the path of the light.

Since the second cylindrical lens 17, the first and second fly-eye lens arrays 34, 35 and the relay lens 38 are already described above, they will not be described here in detail.

### Third Embodiment

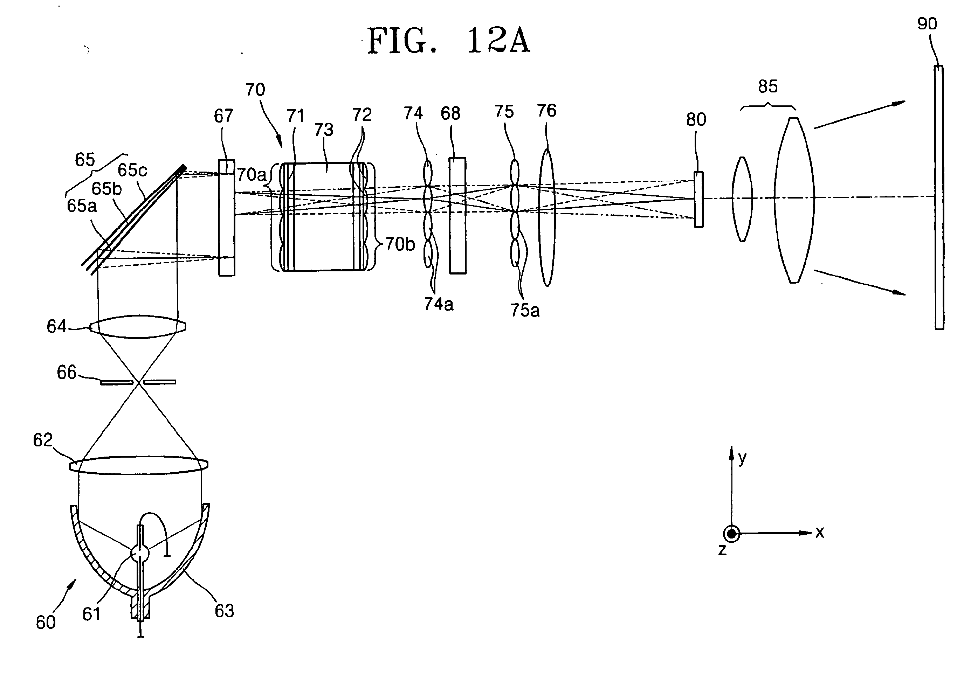

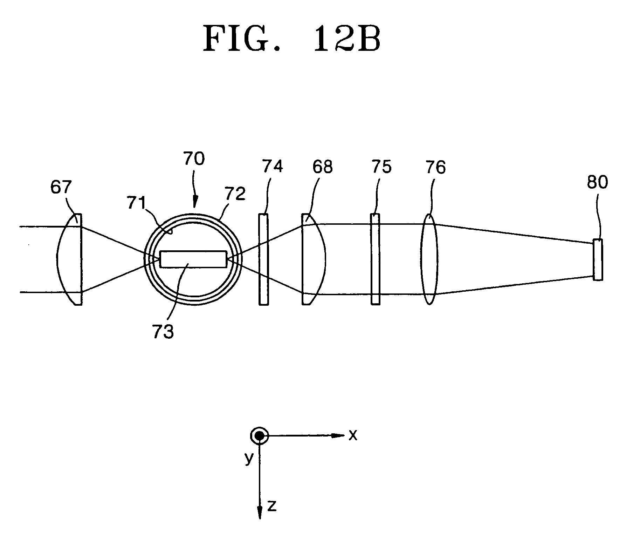

Referring to Figures 12A and 12B, a third projection system according to the present invention includes a light source 60, a colour separator 65, a scrolling unit 70, a light valve 80 and a projection lens unit 85. The colour separator 65 separates light emitted from the light source 60 according to colour. The scrolling unit 70 scrolls the plurality of coloured beams obtained by the colour separator 65. The light valve 80 processes the beams scrolled by the scrolling unit 70 according to an image signal and forms a picture. The projection lens unit 85 magnifies the picture formed by the light valve 80 and projects the magnified picture onto a screen 90.

The light source 60 emits white light and includes a lamp 61 and a mirror 63, for directing the light emitted from the lamp 61 in the desired direction. The mirror 63 is a parabolic mirror which collimates the light from the 61. Alternatively, the reflection mirror 63 may be an elliptical mirror whose first focal point is the position of the lamp 61 and whose second focal point is a point where light is focused. Because a parabolic mirror is used as the reflection mirror 63, a first focusing lens 62 for focusing light emitted from the lamp 61 is also included.

A spatial filter 66 for controlling the divergence angle (or etendue) of light emitted from the light source 60 and a second focusing lens 64 for collimating light passed through the space filter 65 are installed between the light source 60 and the colour separator 65.

The colour separator 65 is constructed with first, second and third dichroic filters 65a, 65b, 65c disposed aslant at different angles with respect to an incident light axis. The colour separator 65 separates incident light according to colour and directs the separated light beams at different angles. For example, the first dichroic filter 65a reflects the red component of white incident light and, at the same time, transmits the green and blue components. The second dichroic filter 65b reflects the green component of the light transmitted by the first dichroic filter 65a and, at the same time, transmits the blue component. The third dichroic filter 65c reflects the blue light transmitted by the first and second dichroic filters 65a, 65b. The third dichroic filter 65c may be replaced with a simple mirror.

The red, green and blue beams, into which incident light has been split, are reflected at different angles so that they are all focussed at the same location and made incident upon the scrolling unit 70.

The scrolling unit 70 is as described above with reference to Figures 6A and 6B and includes a light guide plate 73 and the helical lens 72 are cylindrical and are arranged at an identical inclinations.
As described above with reference to Figure 6A, the rotation of the scrolling unit 70 simulates a rectilinear motion (which is in direction indicated by arrow B) of the lens cells 72 as viewed from the area A through which the light L passes so that colour scrolling is achieved.

The scrolling unit 70 has an inner surface 71, a first side 70a, through which the light L enters, and a second side 70b, through which the light L exits. The light guide plate 73 is disposed between the first and second sides 70a, 70b of the scrolling unit 70. Preferably, but not necessarily, the light guide plate 73 guides the light L in direction z, which is perpendicular to direction y of the rectilinear motion of the lens array of the scrolling unit 70 and to the direction x, in which light advances.

A first cylindrical lens 67 is disposed between the colour separator 65 and the scrolling unit 70 and reduces the width of a light beam incident upon the scrolling unit 70. A first cylinder lens array 74, a second cylindrical lens 68, a second cylinder lens array 75 and a relay lens 76 are disposed in series in the light path between the scrolling unit 70 and the light valve 80. The locations of the first cylinder lens array 74 and second cylindrical lens 68 may be switched.

Referring to Figure 12B, the light guide plate 73 guides the light L in direction z, which is perpendicular to a colour separation direction, y, (or a scrolling direction) and to direction x, in which light advances. Since the light guide plate 73 guides incident light only in direction z, the light is uniformly distributed in direction z. However, since the light guiding by the light guide plate 73 is not performed in the colour separation direction, y, (or the scrolling direction), colour beams separated by each of the lens cells 72 while passing through the first surface 70a of the scrolling unit 70 are transferred to the second surface 70b without being changed.

The first and second cylinder lens arrays 74, 75 are formed by aligning a plurality of cylinder lens cells 74a and a plurality of cylinder lens cells 75a, respectively. Preferably, but not necessarily, an alignment direction (which is indicated by character y) of the cylinder lens cells 74a and 75a is perpendicular to direction z, in which the light guide plate 73 guides light. Light guided in one direction by the light guide plate 73 is transferred to the first cylinder lens array 74 so that an array of red, green and blue colour beams is formed on each of the lens cells 74a of the first cylinder lens array 74. The red, green and blue beams are transferred from the first cylinder lens array 74 to the second cylinder lens array 75, pass through the relay lens 76, and are focused on corresponding colour areas of the light valve 80. Hence, red, green and blue bars are formed on the light valve 80. The second cylindrical lens 68 collimates light converged by the first cylindrical lens 67.

The red, green and blue colour bars are scrolled by rotation of the scrolling unit 70, thereby forming a colour image. The scrolling performed by the scrolling unit 70 is the same as described above with reference to Figures 10A through 10C.

### Fourth Embodiment

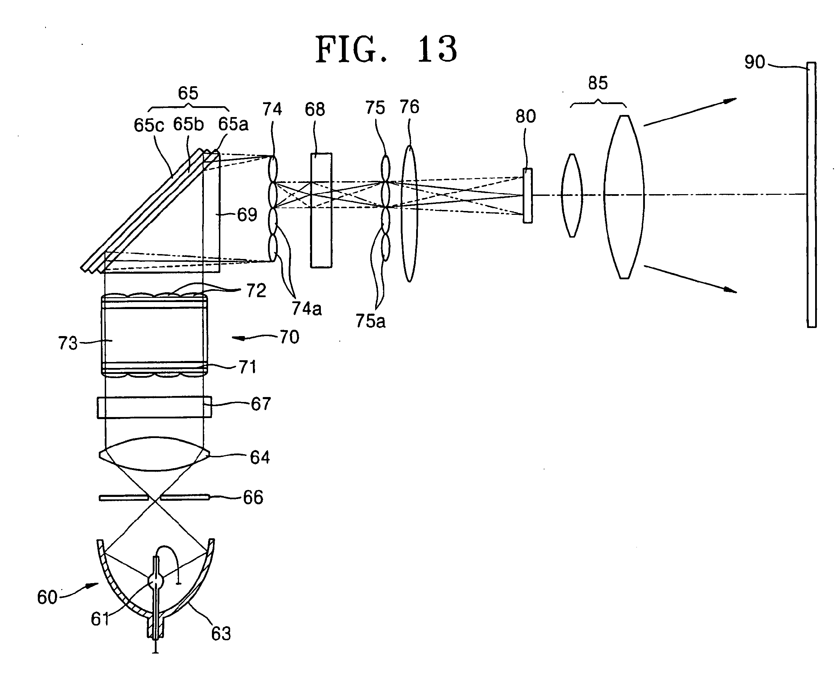

Referring to Figure 13, in a modified example of the projection system of Figure 12A, the first, second, and third dichroic filters 65a, 65b, 65c of the colour separator 65 are disposed parallel to one another. Since elements indicated by like reference numerals in Figures 12A and 13 perform the same functions, they will not be described in detail.

In the fourth projection system, the scrolling unit 70 is disposed between a light source 60 and a colour separator 65. A first cylindrical lens 67 is disposed in front of the scrolling unit 70 and increases light efficiency by reducing the width of a light beam incident upon the scrolling unit 70. A prism 69 is further installed on a light path between the scrolling 70 and the colour separator 65.

### Fifth Embodiment

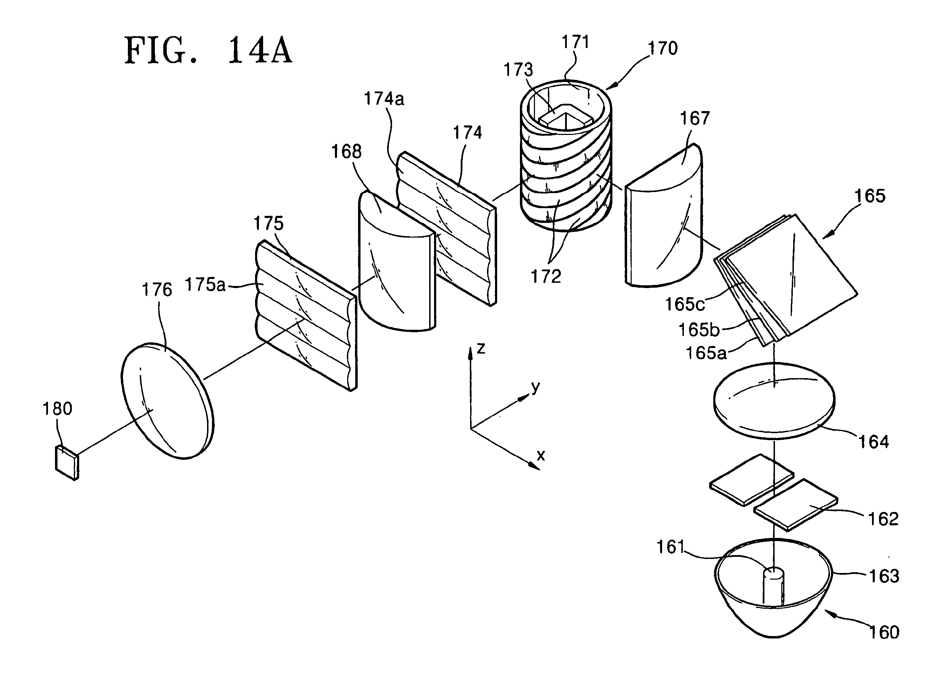

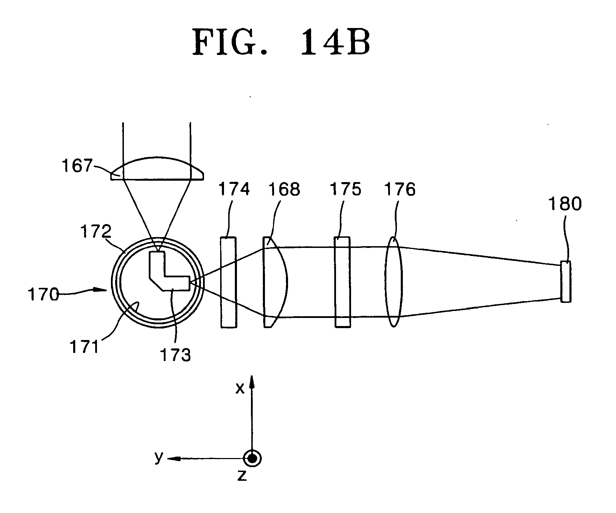

As shown in Figures 14A and 14B, a projection system according to still another embodiment of the present invention includes a light source 160, a colour separator 165, a scrolling unit 170, a light path changer 173, a light valve 180, and a projection lens unit 185. The colour separator 165 separates light emitted from the light source 160 according to colour. The scrolling unit 170 scrolls a plurality of colour beams obtained by the colour separator 165. The light path changer 173 is installed within the scrolling unit 170 and changes the travelling path of incident light. The light valve 180 processes the colour beams scrolled by the scrolling unit 170 according to an image signal and forms a picture. The projection lens unit 185 magnifies the picture formed by the light valve 180 and projects the magnified picture onto a screen 190.

The light source 160 emits white light and includes a lamp 161, for generating light, and a reflection mirror 163, for reflecting light emitted from the lamp 161 and for guiding the path of the reflected light. The reflection mirror 163 is either a parabolic mirror or an elliptical mirror. The reflection mirror 163 of Figure 14A is an elliptical mirror.

A spatial filter 162, which controls the divergence angle (or etendue) of light emitted from the light source 160, and a collimating lens 164, which collimates light diverged by the space filter 162, are installed between the light source 160 and the colour separator 165.

The colour separator 165 is constructed with first, second, and third dichroic filters 165a, 165b, 165c disposed aslant at different angles with respect to an incident light axis. The colour separator 165 separates incident light according to a predetermined wavelength range and advances the separated light beams at different angles. For example, the first dichroic filter 165a reflects the red component of white incident light and, at the same time, transmits the green and blue components. The second dichroic filter 165b reflects the green component of the light transmitted by the first dichroic filter 165a and, at the same time, transmits the blue component. The third dichroic filter 165c reflects the blue light transmitted by the first and second dichroic filters 165a, 165b. The third dichroic filter 165c may be replaced with a simple mirror

The red, green and blue beams, into which incident light has been separated according to wavelength by the first, second, and third dichroic filters 165a, 165b, and 165c, are reflected at different angles. For example, the R and B beams are focused on the same location as the G beam and then made incident upon the scrolling unit 170.

The scrolling unit 170 is formed by spirally arranging at least one lens cell 172 on an outer circumferential surface of a drum-like plate 171. Preferably, but not necessarily, the lens cells 172 are cylindrical.

The drum-like plate 171 may be of various polyprism shapes. The scrolling unit 170 is rotatable. As described above with reference to Figure 6A, the rotation of the scrolling unit 170 simulates a rectilinear motion (which is in direction indicated by arrow B) of the lens cells 172 as viewed from the area A through which the light L passes so that colour scrolling is achieved.

A light path changer 173 is disposed within the scrolling unit 170 to change the path of light received through the scrolling unit 170. The light path changer 173 is a light guide plate which is curved at a predetermined angle (θ). Alternatively, the light path changer 173 may be a mirror which is inclined at a predetermined angle with respect to the axis of light received through the scrolling unit 170. Since the light path changer 173 is curved at the predetermined angle (θ), an area of the scrolling unit 20 through which light goes out can be changed. The scrolling unit 170 has a first surface 170a, through which the light L enters, and a second surface 170b, through which the light L goes out. The second surface 170b is determined depending on the curved shape of the light path changer 173. Light incident upon the scrolling unit 170 through the first surface 170a is guided by the light path changer 173 toward the second surface 170b.

Preferably, but not necessarily, the second surface 170b includes lens cells that are arranged in a way the same as or similar to the lens array of the first surface 170b.

The light path changer 173 changes the path of light incident upon the scrolling unit 170 and guides light passed through the first surface 170a so that the light is uniformly distributed in a predetermined direction. Referring to Figure 14B, the light path changer 173 guides light in a direction which is perpendicular to the direction in which the lens array of the scrolling unit 170 rectilinearly moves (i.e., a colour separation direction or a scrolling direction) and to a direction in which light advances. Since light is guided only in one direction while passing through the light path changer 173, it is uniformly distributed in the direction. However, since light guiding by the light path changer 173 is not performed in the colour separation direction (or the scrolling direction), colour beams separated by each of the lens cells 172 while passing through the first surface 170a of the scrolling unit 170 are transferred to the second surface 170b without being changed.

A first cylindrical lens 167 is disposed on a light path between the colour separator 165 and the scrolling unit 170 and reduces the width of a light beam incident upon the scrolling unit 170. A first cylinder lens array 174, a second cylindrical lens 168, a second cylinder lens array 175, and a relay lens 176 are sequentially disposed on a light path between the scrolling unit 170 and the light valve 180. The locations of the first cylinder lens array 174 and second cylindrical lens 168 may be switched.

The first and second cylinder lens arrays 174, 175 are formed by aligning a plurality of cylinder lens cells 174a and a plurality of cylinder lens cells 175a, respectively. Preferably, but not necessarily, an alignment direction (which is indicated by character z) of the cylinder lens cells 174a and 175a is perpendicular to the direction in which the light path changer 173 guides light. Light guided in one direction by the light path changer 173 is transferred to the first cylinder lens array 174 so that an array of red, green and blue colour beams is formed on each of the lens cells 174a. The red, green and blue beams are transferred from the first cylinder lens array 174 to the second cylinder lens array 175, pass through the relay lens 176, and are focused on corresponding colour areas of the light valve 180. Hence, red, green and blue colour bars are formed on the light valve 180. The second cylindrical lens 168 collimates light converged by the first cylindrical lens 167.

The red, green and blue bars are scrolled by rotation of the scrolling unit 170, thereby forming a colour image. The scrolling performed by the scrolling unit 170 is the same as described above with reference to Figures 10A through 10C.

### Sixth Embodiment

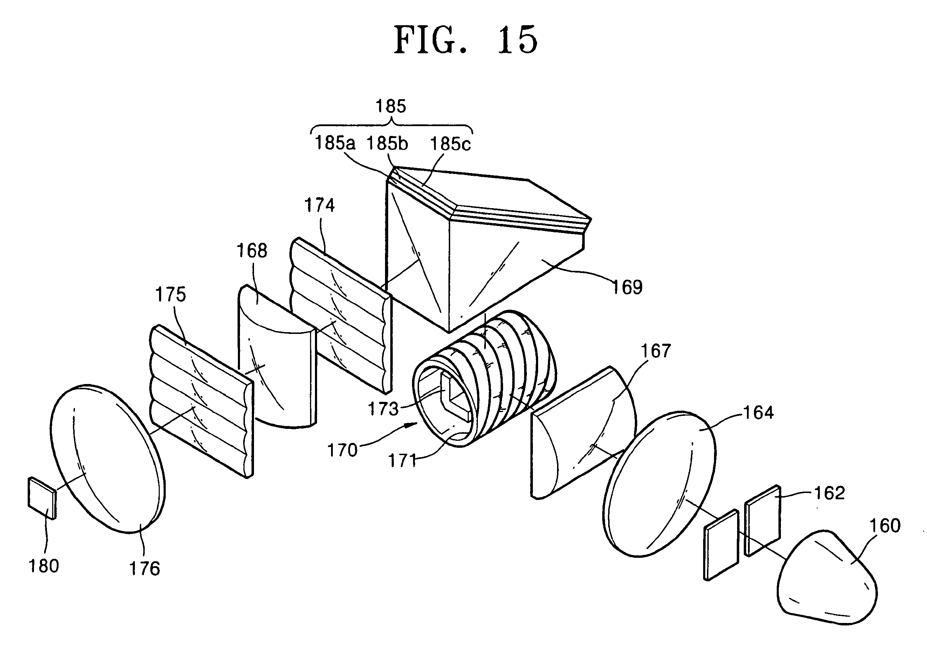

Referring to Figure 15, a sixth projection system, according to the present invention, includes a colour separator 185, which includes first, second, and third dichroic filters 185a, 185b, 185c for transmitting or reflecting incident light according to colour. The first, second, and third dichroic filters 185a, 185b, and 185c are disposed parallel to one another. Since elements indicated by like reference numerals in Figures 14A and 15 perform the same functions, they will not be described in detail.

In the modified projection system of Figure 15, the scrolling unit 170 is disposed between the light source 160 and the colour separator 185. A first cylindrical lens 167 is disposed in front of the scrolling unit 170 and increases light efficiency by reducing the width of a light beam incident upon the scrolling unit 170. A prism 169 is further installed on a light path between the scrolling 170 and the colour separator 185.

A plurality of colour beams obtained by the colour separator 185 are incident upon corresponding colour areas of the light valve 180 via the first and second cylinder lens arrays 174 and 175 and the relay lens 176, thereby forming colour bars. The colour bars are scrolled with a rotation of the scrolling unit 170, thereby forming a colour image.

In a projection system according to the present invention, a single scrolling unit scrolls a plurality of colour beams which travel along a single path. Thus, the colour beams can be controlled to have an identical speed.

Also, since the scrolling unit is formed by spirally arranging at least one lens cell on an outer circumferential surface of a drum- or polyprism-like plate, a simple and small projection system can be obtained. Still further, since all colour beams are scrolled using a single scrolling unit at an identical speed, the synchronization of colour bars according to an image signal is easily controlled. Consequently, the quality of an image can be improved.

## Claims

1. An apparatus comprising:
a scrolling unit (20, 70, 170) for scrolling an incident light beam having a rectangular cross-section with an original width which is relatively wide compared to that of the scrolling unit,
wherein said scrolling unit has an input side, an output side and at least one helical cylindrical lens (22, 72, 172) which is helically arranged on an outer circumferential surface of a cylinder;
wherein an area through which the incident light beam enters the input side of the scrolling unit defines an apparent cylinder lens array:
wherein the rotation of the scrolling unit about the axis of the cylinder simulates a rectilinear motion of the apparent cylinder lens array;
a first cylindrical lens (16, 67, 167) disposed on the input side of the scrolling unit; and
a second cylindrical lens (17, 68, 168) disposed on the output side of the scrolling unit;
**characterised in that**
said first cylindrical lens is adapted to reduce the width of said relatively wide incident light beam in a direction perpendicular to the axis of the cylinder lens array, so that the shape of the incident light beam aligns more closely with that of the scrolling unit; and
said second cylindrical lens is adapted to expand the width of a light beam exiting through said output side of the scrolling unit, returning the beam to its original width.

2. The apparatus of claim 1, wherein a light guide plate (25, 26, 73, 173) is included between first and second surfaces of the scrolling unit through which the incident light passes.

3. The apparatus of claim 1, wherein a bent light guide plate (27, 173) is installed within the scrolling unit.

4. The apparatus of claim 1, wherein the lens array comprises a plurality of helical cylindrical lenses (22, 72, 172) which are arranged at an identical inclination on the outer circumferential surface of the cylinder.

5. A projection system comprising:
a light source (10, 60);
a colour separator (15, 55, 65, 165, 185) which separates light emitted from the light source (10, 60) according to colour;
an apparatus according to claim 1; and
a light valve (40, 80, 180) on which a plurality of colour beams obtained by the colour separator (55, 65, 165,185) are incident via the scrolling unit (20, 70, 170) and which processes the colour beams according to an input image signal to form a colour image.

6. The projection system of claim 5, wherein the colour separator (15, 65) includes first, second, and third dichroic filters (15a, 15b, 15c, 65a, 65b, 65c) adjacent to one another and inclined at different angles and transmitting or reflecting the incident light according to colour, and the scrolling unit (20, 73) is disposed behind the colour separator (15, 65).

7. The projection system of claim 5, wherein the colour separator (55, 65, 165, 185) includes first, second, and third dichroic filters (55a, 55b, 55c, 65a, 65b, 65c, 165a, 165b, 165c, 185a, 185b, 185c) adjacent and inclined parallel to one another and transmitting or reflecting the incident light according to colour, and the scrolling unit (20, 73, 170) is disposed in front of the colour separator (55, 65, 165, 185).

8. The projection system of claim 5, wherein first and second fly-eye lens arrays (34, 35, 74, 75) are disposed on a light path between the colour separator (55, 65) and the light valve (40, 80).

9. The projection system of claim 8, wherein a relay lens (38, 78) is disposed on a light path between the second fly-eye lens array (35, 75) and the light valve (40, 80).

10. The projection system of claim 5 or 8, wherein a spacial filter (5, 66, 162) for controlling the divergence angle of light emitted from the light source (10, 60) is disposed on a light path between the light source (10, 60) and the colour separator (55, 65, 165, 185).

11. The projection system of claim 5, wherein the lens array comprises a plurality of lenses (22, 72, 172) arranged at an identical inclination on the outer circumferential surface of the cylinder.

12. The projection system of any one of claims 5, 6, 7, 10 or 11, further comprising:
a light guide plate (25, 26, 73, 173) which is disposed within the scrolling unit (20, 70, 170) and guides light transmitted through the scrolling unit (20, 70, 170).

13. The projection system of claim 12, wherein first and second cylinder lens arrays (174, 175) have a plurality of cylinder lens cells arranged parallel to one another and are disposed on a light path between the colour separator (165, 185) and the light valve (180).

14. The projection system of claim 13, wherein a direction in which the light guide plate (173) guides light incident upon the scrolling unit (170) is perpendicular to a direction in which the cylinder lens cells are arranged.

15. The projection system of claim 12, wherein the direction in which the light guide plate (26, 173) guides light incident upon the scrolling unit (20, 170) is perpendicular to a direction in which the scrolling unit (20, 170) scrolls light.

16. The projection system of claim 13, wherein a relay lens (176) is disposed on a light path between the second cylinder lens array (175) and the light valve (180).

17. The projection system of claim 12, wherein the light guide plate (26, 173) is bent at a predetermined angle.

18. The projection system of claim 17, wherein the angle is determined so that a lens array defined by an area of the scrolling unit (20, 70, 170) through which light enters has a shape the same as or similar to the shape of a lens array defined by an area of the scrolling unit (20, 70, 170) through which the light goes out via the light guide plate.

19. The projection system of claim 12, wherein a colour scrolling speed depends on a width of a lens cell and the inclination of the lens cell.

## Patentansprüche

1. Vorrichtung, umfassend:
eine Verschiebungseinheit (20, 70, 170) zum Verschieben eines einfallenden Lichtstrahls, der einen rechtwinkligen Querschnitt aufweist, mit einer ursprünglichen Breite, die im Vergleich mit der der Verschiebungseinheit relativ breit ist,
wobei die Verschiebungseinheit eine Eingangsseite, eine Ausgangsseite und mindestens eine schraubenförmige Zylinderlinse (22, 72, 172), die schraubenförmig auf einer äußeren Umfangsoberfläche eines Zylinders angeordnet ist, aufweist;
wobei ein Bereich, durch den der einfallende Lichtstrahl in die Eingangsseite der Verschiebungseinheit eintritt, eine scheinbare Zylinderlinsenanordnung definiert;
wobei die Rotation der Verschiebungseinheit um die Achse des Zylinders eine geradlinige Bewegung der scheinbaren Zylinderlinsenanordnung stimuliert;
eine erste Zylinderlinse (16, 67, 167), die an der Eingangsseite der Verschiebungseinheit angeordnet ist; und
eine zweite Zylinderlinse (17, 68, 168), die an der Ausgangsseite der Verschiebungseinheit angeordnet ist;
**dadurch gekennzeichnet, dass**
die erste Zylinderlinse ausgelegt ist, die Breite des relativ breiten einfallenden Lichtstrahls in einer Richtung senkrecht zu der Achse der Zylinderlinsenanordnung zu reduzieren, so dass die Form des einfallenden Lichtstrahls näher mit der der Verschiebungseinheit ausgerichtet wird; und
die zweite Zylinderlinse ausgelegt ist, die Breite eines Lichtstrahls, der durch die Ausgangsseite der Verschiebungseinheit austritt, zu erweitern, um den Strahl auf seine ursprüngliche Breite zurückzubringen.

2. Vorrichtung nach Anspruch 1, wobei eine Lichtführungsplatte (25, 26, 73, 173) zwischen ersten und zweiten Oberflächen der Verschiebungseinheit, durch die das einfallende Licht passiert, enthalten ist.

3. Vorrichtung nach Anspruch 1, wobei eine gebogene Lichtführungsplatte (27, 173) innerhalb der Verschiebungseinheit installiert ist.

4. Vorrichtung nach Anspruch 1, wobei die Linsenanordnung eine Vielzahl von schraubenförmigen Zylinderlinsen (22, 72, 172) umfasst, die bei einer identischen Neigung an der äußeren Umfangsoberfläche des Zylinders angeordnet sind.

5. Projektionssystem, umfassend:
eine Lichtquelle (10, 60);
ein Farbtrennfilter (15, 55, 65, 165, 185), das von der Lichtquelle (10, 60) abgegebenes Licht nach Farben trennt;
eine Vorrichtung nach Anspruch 1; und
ein Lichtventil (40, 80, 180), auf das eine Vielzahl von Farbstrahlen, erhalten durch das Farbtrennfilter (55, 65, 165, 185), über die Verschiebungseinheit (20, 70, 170) einfallen und das die Farbstrahlen gemäß einem eingegebenen Bildsignal verarbeitet, um ein Farbbild zu bilden.

6. Projektionssystem nach Anspruch 5, wobei das Farbtrennfilter (15, 65) erste, zweite und dritte dichroitische Filter (15a, 15b, 15c, 65a, 65b, 65c) aneinander angrenzend und in verschiedenen Winkeln geneigt und das einfallende Licht nach Farbe durchlassend oder reflektierend enthält und die Verschiebungseinheit (20, 73) hinter dem Farbtrennfilter (15, 65) angeordnet ist.

7. Projektionssystem nach Anspruch 5, wobei das Farbtrennfilter (55, 65, 165, 185) erste, zweite und dritte dichroitische Filter (55a, 55b, 55c, 65a, 65b, 65c, 165a, 165b, 165c, 185a, 185b, 185c) angrenzend und parallel zueinander geneigt und das einfallende Licht nach Farbe durchlassend oder reflektierend enthält und die Verschiebungseinheit (20, 73, 170) vor dem Farbtrennfilter (55, 65, 165, 185) angeordnet ist.

8. Projektionssystem nach Anspruch 5, wobei die ersten und zweiten Fliegenaugenlinsen-Anordnungen (34, 35, 74, 75) in einen Lichtweg zwischen dem Farbtrennfilter (55, 65) und dem Lichtventil (40, 80) angeordnet sind.

9. Projektionssystem nach Anspruch 8, wobei eine Relaislinse (38, 78) in einem Lichtweg zwischen der zweiten Fliegenaugenlinsen-Anordnung (35, 75) und dem Lichtventil (40, 80) angeordnet ist.

10. Projektionssystem nach Anspruch 5 oder 8, wobei ein Raumfilter (5, 66, 162) zum Steuern des Divergenzwinkels von Licht, das von der Lichtquelle (10, 60) abgegeben wird, in einem Lichtweg zwischen der Lichtquelle (10, 60) und dem Farbtrennfilter (55, 65, 165, 185) angeordnet ist.

11. Projektionssystem nach Anspruch 5, wobei die Linsenanordnung eine Vielzahl von Linsen (22, 72, 172) umfasst, die bei einer identischen Neigung an der äußeren Umfangsoberfläche des Zylinders angeordnet sind.

12. Projektionssystem nach einem der Ansprüche 5, 6, 7, 10 oder 11, ferner umfassend:
eine Lichtführungsplatte (25, 26, 73, 173), die innerhalb der Verschiebungseinheit (20, 70, 170) angeordnet ist und durch die Verschiebungseinheit (20, 70, 170) durchgelassenes Licht leitet.

13. Projektionssystem nach Anspruch 12, wobei erste und zweite Zylinderlinsenanordnungen (174, 175) eine Vielzahl von Zylinderlinsenzellen parallel zueinander angeordnet aufweisen und die in einem Lichtweg zwischen dem Farbtrennfilter (165, 185) und dem Lichtventil (180) angeordnet sind.

14. Projektionssystem nach Anspruch 13, wobei eine Richtung, in die die Lichtführungsplatte (173) auf die Verschiebungseinheit (170) einfallendes Licht leitet, senkrecht zu einer Richtung ist, in der die Zylinderlinsenzellen angeordnet sind.

15. Projektionssystem nach Anspruch 12, wobei die Richtung, in die die Lichtführungsplatte (26, 173) auf die Verschiebungseinheit (20, 170) einfallendes Licht leitet, senkrecht zu einer Richtung ist, in die die Verschiebungseinheit (20, 170) Licht verschiebt.

16. Projektionssystem nach Anspruch 13, wobei eine Relaislinse (176) in einem Lichtweg zwischen der zweiten Zylinderlinsenanordnung (175) und dem Lichtventil (180) angeordnet ist.

17. Projektionssystem nach Anspruch 12, wobei die Lichtführungsplatte (26, 173) in einem im Voraus bestimmten Winkel gebogen ist.

18. Projektionssystem nach Anspruch 17, wobei der Winkel so bestimmt ist, dass eine Linsenanordnung, definiert durch einen Bereich der Verschiebungseinheit (20, 70, 170), durch den Licht eintritt, eine Form aufweist, die gleich oder ähnlich der Form einer Linsenanordnung ist, definiert durch einen Bereich der Verschiebungseinheit (20, 70, 170), durch den Licht über die Lichtführungsplatte hinausgeht.

19. Projektionssystem nach Anspruch 12, wobei eine Farbverschiebungsgeschwindigkeit von einer Breite einer Linsenzelle und der Neigung der Linsenzelle abhängt.

## Revendications

1. Appareil comprenant :
une unité de défilement (20, 70, 170) pour faire défiler un faisceau de lumière incidente ayant une coupe transversale rectangulaire avec une largeur initiale qui est relativement large par rapport à celle de l'unité de défilement,
dans lequel ladite unité de défilement a un côté entrée, un côté sortie et au moins une lentille cylindrique hélicoïdale (22, 72, 172) qui est disposée de manière hélicoïdale sur une surface circonférentielle externe d'un cylindre ;
dans lequel une zone à travers laquelle le faisceau de lumière incidente pénètre dans le côté entrée de l'unité de défilement définit une mosaïque de lentilles de cylindre apparent ;
dans lequel la rotation de l'unité de défilement autour de l'axe du cylindre simule un mouvement rectiligne de la mosaïque de lentilles de cylindre apparent ;
une première lentille cylindrique (16, 67, 167) disposée sur le côté entrée de l'unité de défilement ; et
une deuxième lentille cylindrique (17, 68, 168) disposée sur le côté sortie de l'unité de défilement ; **caractérisé en ce que**
ladite première lentille cylindrique est adaptée de façon à réduire la largeur dudit faisceau relativement large de lumière incidente dans une direction perpendiculaire à l'axe de la mosaïque de lentilles du cylindre, de manière à ce que la forme du faisceau de lumière incidente s'aligne plus étroitement avec celle de l'unité de défilement ; et
ladite deuxième lentille cylindrique est adaptée de façon à étendre la largeur d'un faisceau de lumière sortant à travers ledit côté sortie de l'unité de défilement, ramenant le faisceau à sa largeur d'origine.

2. Appareil selon la revendication 1, dans lequel une plaque de guidage de lumière (25, 26, 73, 173) est comprise entre la première et la deuxième surface de l'unité de défilement à travers laquelle la lumière incidente passe.

3. Appareil selon la revendication 1, dans lequel une plaque de guidage de lumière coudée (27, 173) est installée à l'intérieur de l'unité de défilement.

4. Appareil selon la revendication 1, dans lequel la mosaïque de lentilles comprend une pluralité de lentilles cylindriques hélicoïdales (22, 72, 172) qui sont disposées à une inclinaison identique sur la surface circonférentielle externe du cylindre.

5. Système de projection comprenant :
une source de lumière (10, 60) ;
un séparateur de couleurs (15, 55, 65, 165, 185) qui sépare la lumière émise par la source de lumière (10, 60) selon la couleur ;
un appareil selon la revendication 1 ; et
un modulateur de lumière (40, 80, 180) sur lequel une pluralité de faisceaux de couleur obtenus par le séparateur de couleurs (55, 65, 165, 185) sont incidents via l'unité de défilement (20, 70, 170) et qui traite les faisceaux de couleur selon un signal d'image d'entrée pour former une image en couleur.

6. Système de projection selon la revendication 5, dans lequel le séparateur de couleurs (15, 65) comprend un premier, un deuxième et un troisième filtre dichroïque (15a, 15b, 15c, 65a, 65b, 65c) adjacents l'un à l'autre et inclinés à des angles différents et transmettant ou réfléchissant la lumière incidente selon la couleur, et l'unité de défilement (20, 73) est disposée derrière le séparateur de couleurs (15, 65).

7. Système de projection selon la revendication 5, dans lequel le séparateur de couleurs (55, 65, 165, 185) comprend un premier, un deuxième et un troisième filtre dichroïque (55a, 55b, 55c, 65a, 65b, 65c, 165a, 165b, 165c, 185a, 185b, 185c) adjacents et inclinés parallèlement l'un à l'autre et transmettant ou réfléchissant la lumière incidente selon la couleur, et l'unité de défilement (20, 73, 170) est disposée devant le séparateur de couleurs (55, 65, 165, 185).

8. Système de projection selon la revendication 5, dans lequel la première et la deuxième mosaïque de lentilles oeil de mouche (34, 35, 74, 75) sont disposées sur un trajet de lumière entre le séparateur de couleurs (55, 65) et le modulateur de lumière (40, 80).

9. Système de projection selon la revendication 8, dans lequel une lentille relais (38, 78) est disposée sur un trajet de lumière entre la deuxième mosaïque de lentilles oeil de mouche (35, 75) et le modulateur de lumière (40, 80).

10. Système de projection selon la revendication 5 ou 8, dans lequel un filtre spatial (5, 66, 162) pour contrôler l'angle de divergence de la lumière émise par la source de lumière (10, 60) est disposé sur un trajet de lumière entre la source de lumière (10, 60) et le séparateur de couleurs (55, 65, 165, 185).

11. Système de projection selon la revendication 5, dans lequel la mosaïque de lentilles comprend une pluralité de lentilles (22, 72, 172) disposées à une inclinaison identique sur la surface circonférentielle externe du cylindre.

12. Système de projection selon l'une quelconque des revendications 5, 6, 7, 10 ou 11, comprenant en outre :
une plaque de guidage de lumière (25, 26, 73, 173) qui est disposée à l'intérieur de l'unité de défilement (20, 70, 170) et qui guide la lumière transmise à travers l'unité de défilement (20, 70, 170).

13. Système de projection selon la revendication 12, dans lequel la première et la deuxième mosaïque de lentilles du cylindre (174, 175) ont une pluralité d'éléments lentilles de cylindre parallèles l'un à l'autre et sont disposées sur un trajet de lumière entre le séparateur de couleurs (165, 185) et le modulateur de lumière (180).

14. Système de projection selon la revendication 13, dans lequel une direction dans laquelle la plaque de guidage de lumière (173) guide la lumière incidente sur l'unité de défilement (170) est perpendiculaire à une direction dans laquelle les éléments lentilles de cylindre sont disposés.

15. Système de projection selon la revendication 12, dans lequel la direction dans laquelle la plaque de guidage de lumière (26, 173) guide la lumière incidente sur l'unité de défilement (20, 170) est perpendiculaire à une direction dans laquelle l'unité de défilement (20, 170) fait défiler la lumière.

16. Système de projection selon la revendication 13, dans lequel une lentille relais (176) est disposée sur un trajet de lumière entre la deuxième mosaïque de lentilles du cylindre (175) et le modulateur de lumière (180).

17. Système de projection selon la revendication 12, dans lequel la plaque de guidage de lumière (26, 173) est coudée à un angle prédéterminé.

18. Système de projection selon la revendication 17, dans lequel cet angle est déterminé de manière à ce qu'une mosaïque de lentilles définie par une zone de l'unité de défilement (20, 70, 170) à travers laquelle la lumière pénètre ait une forme qui soit la même ou qui soit similaire à la forme d'une mosaïque de lentilles définie par une zone de l'unité de défilement (20, 70, 170) à travers laquelle la lumière sort via la plaque de guidage de lumière.

19. Système de projection selon la revendication 12, dans lequel une vitesse de défilement de couleurs dépend d'une largeur d'un élément lentille et de l'inclinaison de cet élément lentille.
